# EUROPÄISCHE PATENTSCHRIFT

(11) **EP 0 830 997 B1**
(45) Veröffentlichungstag und Bekanntmachung des Hinweises auf die Patenterteilung: **16.05.2001**
(21) Anmeldenummer: 97114155.1
(22) Anmeldetag: 16.08.1997
(51) Int. Cl.: B60T 17/18, B60T 13/68, B60T 13/26, G05D 16/20

(54) **Energieversorgungseinrichtung für Druckluft-Bremsanlagen von Fahrzeugen**
Energy supply for pneumatic brake systems of vehicles
Approvisionnement énergétique pour systèmes de freinage pneumatiques de véhicules

(30) Priorität: 19.09.1996 DE 19638202
(43) Veröffentlichungstag der Anmeldung: 25.03.1998
(73) Patentinhaber: KNORR-BREMSE Systeme für Nutzfahrzeuge GmbH, 80809 München (DE)
(72) Erfinder: Delfs, Joachim, 71282 Hemmingen (DE); Leopold, Rüdiger, 71263 Weil der Stadt (DE); Seegis, Claus, 73734 Esslingen (DE)

(56) Entgegenhaltungen:
- EP-A- 0 234 290
- EP-A- 0 345 203
- EP-A- 0 561 171
- GB-A- 2 069 644
- US-A- 4 817 497

## Beschreibung

### Stand der Technik

Die Erfindung geht aus von einer Energieversorgungseinrichtung für Druckluft-Bremsanlagen nach der Gattung des Patentanspruchs 1.

Es ist schon eine solche Energieversorgungseinrichtung bekannt (EP 0 689 117 A2). Bei dieser ist das bisher übliche Überströmventil je Kreis der Druckluft-Bremsanlage durch ein federbetätigt geschlossenes Absperrventil ersetzt, welches je nach den Erfordernissen des Kreises druckabhängig durch ein von einem elektronischen Steuergerät schaltbares Vorsteuer-Magnetventil in seine Offenstellung und in seine Schließstellung überführbar ist. So können Betriebsbremskreise bevorzugt mit Druckluft aufgefüllt werden. Stromausfall führt jedoch zum Schließen des Absperrventils, so daß die jeweiligen Kreise der Druckluft-Bremsanlage nur über eine Bypassleitung mit einem auf einen relativ hohen Öffnungsdruck eingestellten Rückschlagventil mit Druckluft notversorgt werden müssen. Hierdurch ist die Funktion der bekannten Energieversorgungseinrichtung eingeschränkt.

### Vorteile der Erfindung

Die erfindungsgemäße Energieversorgungseinrichtung mit den kennzeichnenden Merkmalen des Patentanspruchs 1 hat demgegenüber den Vorteil, daß bei Stromausfall trotzdem die bevorrechtigte Befüllung der Betriebsbremskreise gegeben ist, während der Anschluß des Feststellbremskreises an eine Energiequelle erst nach Überschreiten der die Hilfsbremswirkung der Betriebsbremse der Bremsanlage sicherstellenden Druckschwelle erfolgt. Erst dann ist ein Lösen der Feststellbremse des Fahrzeugs möglich.

Fällt jedoch aufgrund eines Schadens in beiden Betriebsbremskreisen der Druck unter die genannte Druckschwelle ab und ist daher die Hilfsbremswirkung der Betriebsbremse nicht mehr gegeben, so sperrt das Absperrventil den Feststellbremskreis gegen die Energiequelle ab. Eine eingelegte Feststellbremse ist dann vor fehlerhaftem Lösen geschützt, weil dem Feststellbremskreis eine Energiespeicherung fehlt.

Durch die in den Unteransprüchen aufgeführten Maßnahmen sind vorteilhafte Weiterbildungen und Verbesserungen der im Patentanspruch 1 angegebenen Energieversorgungseinrichtung für Druckluft-Bremsanlagen möglich.

### Zeichnung

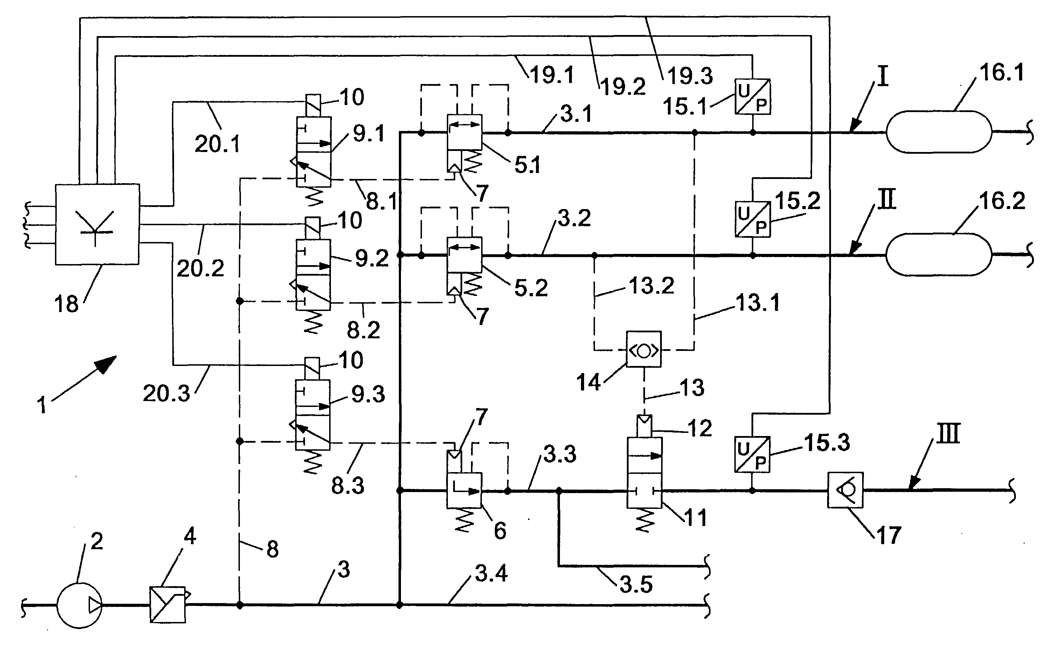

Ein Ausführungsbeispiel der Erfindung ist in der Zeichnung anhand eines Schaltschemas einer Energieversorgungseinrichtung für Druckluft-Bremsanlagen von Fahrzeugen vereinfacht dargestellt und in der nachfolgenden Beschreibung näher erläutert.

### Beschreibung des Ausführungsbeispiels

Eine in der Zeichnung wiedergegebene Energieversorgungseinrichtung 1 einer im übrigen nicht dargestellten Druckluft-Bremsanlage von Fahrzeugen, insbesondere von Nutzfahrzeugen, weist als Energiequelle einen Luftkompressor 2 auf, von dem eine Versorgungsleitung 3 ausgeht. Diese Versorgungsleitung 3 ist mehrfach verzweigt: Ein Leitungszweig 3.1 ist einem ersten Betriebsbremskreis I, ein Leitungszweig 3.2 einem zweiten Betriebsbremskreis II, ein Leitungszweig 3.3 einem mit Federspeicherzylindern ausgestatteten Feststellbremskreis III zugeordnet. Ein vierter Leitungszweig 3.4 kann zu einem nicht dargestellten Luftfederkreis führen. Ein vom Leitungszweig 3.3 wiederum abführender Zweig 3.5 kann zu einem gleichfalls nicht dargestellten Nebenverbraucherkreis gehören.

In der Versorgungsleitung 3 befindet sich ausgangsseitig des Luftkompressors 2 ein auf ca. 12 bar Abschaltdruck eingestellter Druckregler 4. In den Leitungszweigen 3.1 und 3.2 der beiden Betriebsbremskreise I und II ist jeweils ein steuerbares Überströmventil 5.1 bzw. 5.2 mit begrenzter Rückströmung angeordnet. Die beiden Überströmventile 5.1 und 5.2 sind auf einen Öffnungsdruck von ca. 6 bis 7 bar eingestellt. Im Leitungszweig 3.3 der Versorgungsleitung 3 befindet sich ein steuerbares Druckbegrenzungsventil 6. Dieses ist auf einen Schließdruck von ca. 8 bar eingestellt. Die beiden Überströmventile 5.1 und 5.2 sowie das Druckbegrenzungsventil 6 sind mit einem pneumatischen Betätigungsmittel 7 versehen, auf dessen Funktion weiter unten eingegangen ist.

Zu den pneumatischen Betätigungsmitteln 7 führen Leitungszweige 8.1, 8.2 und 8.3 einer Steuerleitung 8, welche in Strömungsrichtung der vom Luftkompressor 2 geförderten Druckluft nach dem Druckregler 4 an die Versorgungsleitung 3 angeschlossen ist. In den drei Leitungszweigen 8.1, 8.2 und 8.3 ist je ein baugleiches Vorsteuerventil 9.1, 9.2 und 9.3 in der Form des 3/2-Wegeventils angeordnet. Die Vorsteuerventile 9.1, 9.2 und 9.3 besitzen ein elektromagnetisches Betätigungsmittel 10, mit dem sie in eine die Steuerleitungszweige 8.1, 8.2 und 8.3 durchschaltende Arbeitsstellung schaltbar sind. In ihrer federbetätigten Ruhestellung sperren die Vorsteuerventile 9.1, 9.2 und 9.3 den von der Versorgungsleitung 3 herangeführten Teil des Steuerleitungszweigs 8.1, 8.2 und 8.3 ab, während der zu den Überströmventilen 5.1 und 5.2 sowie zum Druckbegrenzungsventil 6 führende Teil der genannten Leitungszweige mit einer Druckentlastungsstelle verbunden ist.

Im zum Feststellbremskreis III gehörenden Versorgungsleitungszweig 3.3 ist stromabwärts des Druckbegrenzungsventils 6 nach dem Abzweig des Versorgungsleitungszweiges 3.5 ein Absperrventil 11 in der Form des 2/2-Wegeventils angeordnet. Dieses hat eine federbetätigte Sperrstellung und eine von einem pneumatischen Betätigungsmittel 12 schaltbare Durchlaßstellung. Der Schaltpunkt des Absperrventils 11 ist auf ca. 5 bar eingestellt. Vom pneumatischen Betätigungsmittel 12 des Absperrventils 11 geht eine Steuerleitung 13 zu einem Wechselventil 14 mit Rückströmung aus. Nach dem Wechselventil 14 ist die Steuerleitung 13 in zwei Leitungszweige 13.1 und 13.2 verzweigt. Der Steuerleitungszweig 13.1 ist stromabwärts des Überströmventils 5.1 an den Leitungszweig 3.1 des Betriebsbremskreises I, der Steuerleitungszweig 13.2 in entsprechender Weise an den Betriebsbremskreis II angeschlossen.

Den beiden Betriebsbremskreisen I und II sowie dem Feststellbremskreis III ist jeweils ein als Druck-SpannungsWandler ausgebildeter Drucksensor 15.1, 15.2 bzw. 15.3 zugeordnet. Die beiden Drucksensoren 15.1 und 15.2 sind zwischen den Überströmventilen 5.1 bzw. 5.2 und einem zu dem Betriebsbremskreis I gehörenden Luftbehälter 16.1 bzw. einem zum Betriebsbremskreis II gehörenden Luftbehälter 16.2 an den jeweiligen Versorgungsleitungszweig 3.1 bzw. 3.2 angeschlossen. Abweichend vom Ausführungsbeispiel können die beiden Drucksensoren 15.1 und 15.2 auch an den zugeordneten Luftbehälter 16.1 bzw. 16.2 angeschlossen sein. Der Drucksensor 15.3 des Feststellbremskreises III ist stromabwärts des Absperrventils 11 an den Versorgungsleitungszweig 3.3 angeschlossen. In diesem Leitungszweig 3.3 befindet sich ferner stromabwärts des Absperrventils 11 ein entgegen der Luftströmungsrichtung sperrendes Rückschlagventil 17. Der Feststellbremskreis III weist keinen Luftbehälter auf.

Die Energieversorgungseinrichtung 1 besitzt ferner ein elektronisches Steuergerät 18, an welches die Drucksensoren 15.1, 15.2 und 15.3 mit Steuerleitungen 19.1, 19.2 und 19.3 angeschlossen sind, während weitere Steuerleitungen 20.1, 20.2 und 20.3 vom Steuergerät 13 zu den Betätigungsmitteln 10 der Vorsteuerventile 9.1, 9.2 und 9.3 führen. Im elektronischen Steuergerät 18 werden die Signale der Drucksensoren 15.1, 15.2 und 15.3 erfaßt und zum druckabhängigen Ansteuern der beiden Überströmventile 5.1 und 5.2 in den Betriebsbremskreisen I und II und des Druckbegrenzungsventils 6 im Feststellbremskreis III ausgewertet.

Die Energieversorgungseinrichtung 1 hat folgende Funktionsweise:

Die vom Luftkompressor 2 geförderte Druckluft wird vom Druckregler 4 in die Versorgungsleitung 3 abgegeben. Beim Befüllen der verschiedenen Kreise der Druckluft-Bremsanlage schaltet das elektronische Steuergerät 18 das Druckbegrenzungsventil 6 in eine Schließstellung, indem das zugeordnete Vorsteuerventil 9.3 in seine Arbeitsstellung geschaltet wird. Druckluft gelangt daher durch die sich öffnenden Überströmventile 5.1 und 5.2 in die beiden Betriebsbremskreise I und II, so daß die zugeordneten Luftbehälter 16.1 und 16.2 aufgefüllt werden. Der sich in den beiden Betriebsbremskreisen I und II luftbehälterseitig einstellende Druck wird vom elektronischen Steuergerät 18 erfaßt. Erreicht der Druck in den beiden Betriebsbremskreisen I und II die Druckschwelle von ca. 5 bar, bei der eine Hilfsbremswirkung der Betriebsbremse der Druckluft-Bremsanlage erzielt wird, schaltet das elektronische Steuergerät 18 das Vorsteuerventil 9.3 in seine Ruhestellung, so daß das Druckbegrenzungsventil 6 geöffnet werden kann. Zugleich gelangt Steuerluft aus den beiden Betriebsbremskreisen I und II durch die Steuerleitungszweige 13.1 und 13.2 zum Wechselventil 14 und weiter durch die Steuerleitung 13 zum Betätigungsmittel 12 des Absperrventils 11, welches bei der erwähnten Druckschwelle von ca. 5 bar in seine Durchlaßstellung schaltet. Druckluft kann nun von der Versorgungsleitung 3 durch den Versorgungsleitungszweig 3.3 über das Druckbegrenzungsventil 6 und das Absperrventil 11 und weiter über das Rückschlagventil 17 in den Feststellbremskreis III strömen. Eine eingelegte Feststellbremse kann jetzt gelöst werden. Des weiteren gelangt Druckluft durch den Versorgungsleitungszweig 3.5 zum Nebenverbraucherkreis. (Auf eine Beschreibung des Auffüllvorganges des an den Versorgungsleitungszweig 3.4 angeschlossenen Luftfederkreises ist verzichtet.)

Ist im Feststellbremskreis III ein Druck von 8 bar erreicht, so sperrt das Druckbegrenzungsventil 6 selbsttätig den Versorgungsleitungszweig 3.3 ab. Das elektronische Steuergerät 18 kann aber auch das Druckbegrenzungsventil 6 in Abhängigkeit vom Signal des Drucksensors 15.3 durch Umschalten des Vorsteuerventils 9.3 in die Sperrstellung überführen. Wird in den Betriebsbremskreisen I und II ein Druck von ca. 12 bar erreicht, so schaltet das elektronische Steuergerät 18 aufgrund der Signale der Drucksensoren 15.1 und 15.2 die Vorsteuerventile 9.1 und 9.2 um und überführt die Überströmventile 5.1 und 5.2 in die Sperrstellung. Sinkt der Druck in den erwähnten Kreisen der Druckluft-Bremsanlage, so gibt das elektronische Steuergerät 18 durch entsprechendes Schalten der Vorsteuerventile 9.1, 9.2 bzw. 9.3 die Druckluftversorgung über die Überströmventile 5.1 bzw. 5.2 und das Druckbegrenzungsventil 6 frei.

Bricht die Stromversorgung des Fahrzeugs zusammen, so ist die Energieversorgung der Druckluft-Bremsanlage dennoch gewährleistet:
Da die Vorsteuerventile 9.1, 9.2 und 9.3 in ihrer federbetätigten Ruhestellung verharren, arbeiten die Überströmventile 5.1 und 5.2 und das Druckbegrenzungsventil 6 wie ein solches in herkömmlicher Bauform ohne pneumatisches Betätigungsmittel 7. Während also im Feststellbremskreis III das Druckbegrenzungsventil 6 bei Drücken unter 8 bar durchgängig ist, nimmt das Absperrventil 11 bei Drücken bis 5 bar seine gezeichnete Sperrstellung ein. Vom Luftkompressor 2 geförderte Druckluft gelangt daher (ohne Berücksichtigung des Auffüllvorgangs im Nebenverbraucher- und Luftfederkreis) durch die Überströmventile 5.1 und 5.2 in die beiden Betriebsbremskreise I und II. Sobald in diesen die Druckschwelle von 5 bar erreicht wird, schaltet das Absperrventil 11 im Feststellbremskreis III in die Durchlaßstellung. Erst ab dieser, die Hilfsbremswirkung der Betriebsbremse der Druckluft-Bremsanlage sicherstellenden Druckschwelle wird der Feststellbremskreis III mit Druckluft versorgt. Bei einem Druck von 8 bar im Feststellbremskreis III sperrt das Druckbegrenzungsventil 6 den Versorgungsleitungszweig 3.3, der Druck in den Betriebsbremskreisen I und II wird durch den Druckregler 4 begrenzt.

Sinkt der Druck in den Betriebsbremskreisen I und II fehlerhafterweise unter die Druckschwelle von 5 bar, so schaltet das Absperrventil 11 in die Sperrstellung um. Eine Versorgung des Feststellbremskreises III durch den Luftkompressor 2 findet dann nicht mehr statt. Eine eingelegte Feststellbremse kann jetzt nicht mehr gelöst werden, da dem Feststellbremskreis III hierfür ein Druckluftvorrat fehlt. Das mit eingelegter Feststellbremse festgehaltene Fahrzeug kann daher nicht in Bewegung gesetzt werden.

Bricht der Versorgungsleitungszweig 3.3 stromaufwärts des Rückschlagventils 17, so verhindert dieses ein ungewolltes Einlegen der Feststellbremse.

## Patentansprüche

1. Energieversorgungseinrichtung (1) für Druckluft-Bremsanlagen von Fahrzeugen,
mit den folgenden Merkmalen:
- es ist ein erster Betriebsbremskreis (I) vorgesehen, dessen Luftbehälter (16.1) über ein steuerbares Überströmventil (5.1) mit Druckluft befüllbar ist,
- es ist ein zweiter Betriebsbremskreis (II) vorgesehen, dessen Luftbehälter (16.2) über ein zweites steuerbares Überströmventil (5.2) mit Druckluft befüllbar ist,
- es ist ein Feststellbremskreis (III) vorgesehen, der über ein steuerbares Ventil (6) mit Druckluft versorgbar ist,
- jedem Bremskreis (I, II, III) ist ein Drucksensor (15.1, 15.2, 15.3) zugeordnet,
- es ist ein elektronisches Steuergerät (18) vorgesehen, in dem die Signale der Drucksensoren (15.1, 15.2, 15.3) erfaßbar und zum druckabhängigen Ansteuern der beiden Überströmventile (5.1, 5.2) in den Betriebsbremskreisen (I, II) und des Ventils (6) im Feststellbremskreis (III) auswertbar sind,
gekennzeichnet durch die weiteren Merkmale:
- im Feststellbremskreis (III) ist als Ventil (6) ein Druckbegrenzungsventil vorgesehen,
- im Feststellbremskreis (III) ist ferner ein Absperrventil (11) vorgesehen, welches federbetätigt seine Sperrstellung einnimmt und oberhalb einer die Hilfsbremswirkung einer Betriebsbremse der Bremsanlage sicherstellenden Druckschwelle in wenigstens einem der Betriebsbremskreise (I, II) in seine Durchlaßstellung schaltbar ist,
- der Feststellbremskreis (III) ist ohne Luftbehälter ausgebildet.

2. Energieversorgungseinrichtung nach Anspruch 1, dadurch gekennzeichnet, daß ein pneumatisches Betätigungsmittel (12) des Absperrventils (11) im Feststellbremskreis (III) über ein Wechselventil (14) luftbehälterseitig an die beiden Betriebsbremskreise (I, II) angeschlossen ist.

3. Energieversorgungseinrichtung nach Anspruch 1, dadurch gekennzeichnet, daß der Feststellbremskreis (III) über ein Rückschlagventil (17) mit Druckluft versorgbar ist.

## Claims

1. Energy supply (1) for pneumatic brake systems of vehicles,
comprising the following feature:
- a first service brake circuit (I) is provided which includes an air reservoir (16.1) adapted to be charged with compressed air via a controllable overflow valve (5.1),
- a second service brake circuit (II) is provided which includes an air reservoir (16.2) adapted to be charged with compressed air via a second controllable overflow valve (5.2),
- a parking brake circuit (III) is provided which is adapted to be supplied with compressed air via a controllable valve (6),
- a pressure sensor (15.1, 15.2, 15.3) is associated with each brake circuit (I, II, III),
- an electronic controller (18) is provided in which the signals from said pressure sensors (15.1, 15.2, 15.3) can be detected and analysed for pressure-dependent control of said two overflow valves (5.1, 5.2) in said service brake circuits (I, II) and of said valve (6) in said parking brake circuit (III),
characterised by the following further features:
- a pressure-limiting valve is provided as valve (6) in said parking brake circuit (III),
- moreover a shut-off valve (11) is provided in said parking brake circuit (III), which moves into its shut-off position under the effect of a spring and which is adapted to be switched to its admission position above a pressure threshold in at least one of said service brake circuits (I, II), which threshold ensures the auxiliary braking effect of a service brake of the brake system,
- said service brake circuit (III) is designed without an air reservoir.

2. Energy supply according to Claim 1, characterised in that a pneumatic operating means (12) of said shut-off valve (11) in said parking brake circuit (III) is connected to said two service brake circuits (I, II) via a shuttle valve (14) on the side of the air reservoir.

3. Energy supply according to Claim 1, characterised in that said parking brake circuit (III) is adapted to be supplied with compressed air via a check valve (17).

## Revendications

1. Dispositif (1) d'alimentation de systèmes pneumatiques de freinage de véhicules automobiles,
ayant les caractéristiques suivantes :
- il est prévu un premier circuit (1) de freinage de service dont le ballon (16.1) à air peut être empli d'air comprimé par une soupape (5.1) de déchargement qui peut être commandée,
- il est prévu un deuxième circuit (2) de freinage de service, dont le ballon (16.2) à air peut être empli d'air comprimé par une deuxième soupape (5.2) de déchargement qui peut être commandée,
- il est prévu un circuit (3) de freinage de stationnement qui peut être alimenté en air comprimé par une vanne (6) qui peut être commandée,
- à chaque circuit (1, 2, 3) de freinage est associé un capteur (15.1, 15.2, 15.3) de pression,
- il est prévu un appareil (18) électronique de commande dans lequel les signaux des capteurs (15.1, 15.2, 15.3) de pression peuvent être relevés et peuvent être exploités pour commander en fonction de la pression les deux vannes (5.1, 5.2) de déchargement des circuits (1, 2) de freinage de service et la vanne (6) du circuit (3) de freinage de stationnement,
caractérisé par les caractéristiques supplémentaires :
il est prévu dans le circuit (3) de freinage de stationnement en tant que vanne (6) une vanne de limitation de la pression,
- il est prévu dans le circuit (3) de freinage de stationnement en outre une vanne (11) d'arrêt qui prend, sous l'action d'un ressort sa position d'isolement et qui, au-dessus d'un seuil de pression assurant l'effet de freinage auxiliaire d'un frein de service du système de freinage, peut venir dans sa position ouverte au moins dans l'un des circuits (1, 2) de freinage de service,
- le circuit (3) de freinage de stationnement est constitué sans ballon à air.

2. Dispositif d'alimentation suivant la revendication 1, caractérisé en ce qu'un moyen (12) pneumatique d'actionnement de la vanne (11) d'arrêt du circuit (3) de freinage de stationnement est raccordé par l'intermédiaire d'une soupape (14) à deux voies du côté du ballon à air aux deux circuits (1, 2) de freinage de service.

3. Dispositif d'alimentation suivant la revendication 1, caractérisé en ce que le circuit (3) de freinage de stationnement peut être alimenté en air comprimé par l'intermédiaire d'un clapet (17) anti-retour.
